# FASCICULE DE BREVET EUROPEEN

(11) **EP 3 649 015 B1**
(45) Date de publication et mention de la délivrance du brevet: **31.03.2021**
(21) Numéro de dépôt: 18752537.3
(22) Date de dépôt: 28.06.2018
(51) Int. Cl.: B60R 5/00, B60N 2/22, B60N 2/36, B60R 21/02

(54) **VEHICULE AUTOMOBILE DOTE D'UNE CLOISON D'ARRET DE CHARGE ET COMPRENANT UN DISPOSITIF DE RETENUE D'UN DOSSIER DE SIEGE**
MIT LADUNGSSCHUTZ AUSGESTATTETES KRAFTFAHRZEUG MIT SITZRÜCKENLEHNENHALTEVORRICHTUNG
MOTOR VEHICLE FITTED WITH A LOAD GUARD AND COMPRISING A SEAT BACKREST RETENTION DEVICE

(30) Priorité: 07.07.2017 FR 1756416
(43) Date de publication de la demande: 13.05.2020
(73) Titulaire: PSA Automobiles SA, 78300 Poissy (FR)
(72) Inventeur: RICHARD, Olivier, 68130 Wittersdorf (FR)
(86) Numéro de dépôt international: PCT/FR2018/051577
(87) Numéro de publication internationale: WO 2019/008251

(56) Documents cités:
- EP-A2- 2 412 570
- FR-A1- 3 019 780
- JP-A- H07 291 004
- US-A- 4 721 338

## Description

### Domaine de l'invention

La présente invention concerne d'une façon générale le domaine de l'aménagement intérieur de véhicules de type utilitaire.

Elle vise en particulier les véhicules automobiles utilitaires pourvus d'une cloison d'arrêt de charge s'étendant transversalement à la direction longitudinale du véhicule entre l'habitacle et l'espace de chargement arrière.

### Arrière-plan de l'invention

Les véhicules utilitaires doivent permettre de trouver un compromis entre proposer un espace de chargement le plus important possible et garantir une sécurité optimale à ses utilisateurs en contenant le charge de sorte à ce qu'elle ne pénètre pas de manière intempestive dans l'habitacle.

Pour ce faire, certains véhicules utilitaires comprennent des cloisons rigides dites d'arrêt de charge s'étendant transversalement à la direction longitudinale du véhicule entre l'habitacle, équipé du siège conducteur et d'au moins un siège passager, et l'espace de chargement arrière.

La demande de brevet française FR 2 836 877 divulgue une telle cloison intérieure d'arrêt de charge comportant un panneau rigide fixe dans lequel est ménagée une ouverture située au niveau du siège passager latéral et permettant de mettre en communication l'espace de chargement arrière et l'habitacle.

Cette cloison comprend en outre une trappe rigide montée mobile par rapport au panneau fixe et permettant d'obturer cette ouverture.

Le dossier du siège passager latéral peut être rabattu sur l'assise afin de dégager dans le prolongement de l'ouverture un espace additionnel autorisant le chargement d'objets de longueur supérieure à la profondeur de l'espace de chargement arrière.

Suite au transport de tels objets allongés, il peut arriver que l'utilisateur remette le dossier latéral avant dans sa configuration relevée d'utilisation mais oublie de repositionner la trappe dans sa position d'obturation de l'ouverture.

Dans un tel cas de figure et bien que le dispositif d'articulation implanté sur le côté externe de ce siège passager latéral comprenne des moyens de verrouillage du dossier dans sa configuration relevée d'utilisation, il peut arriver, qu'en cas de choc violent par l'avant du véhicule, les charges contenues dans l'espace de chargement arrière soient propulsées violemment par ripage contre le dossier et entrainent une déformation très importante vers l'avant de ce dernier et notamment de sa partie interne non retenue par ces moyens de verrouillage.

Plus la hauteur de l'ouverture ménagée dans la cloison d'arrêt de charge est importante, plus l'amplitude de déformation augmente (le couple s'exerçant sur le dossier variant en effet en fonction de la distance entre l'axe de pivotement du dossier et la zone de contact entre la charge et ce dossier).

En pratique, pour des ouvertures de grande hauteur, la déformation peut atteindre plusieurs centaines de millimètres ce qui s'avère particulièrement dangereux pour l'occupant du siège et incompatible avec les normes réglementaires de sécurité en vigueur

Le document US 4 721 338 A divulgue un véhicule selon le préambule de la revendication 1.

### Objet et résumé de l'invention

La présente invention vise donc à limiter cette déformation du dossier de siège passager latéral en cas d'accident du fait du ripage des charges contenues dans l'espace de chargement arrière.

Elle propose à cet effet un véhicule automobile comportant une cloison d'arrêt de charge s'étendant transversalement entre l'habitacle et un espace de chargement arrière, ledit habitacle comportant au moins un siège passager doté d'un dossier rabattable, ladite cloison étant pourvue d'une ouverture située au niveau dudit siège passager pour permettre la mise en communication dudit habitacle et dudit espace de chargement arrière, ledit véhicule comportant également un dispositif de retenue comprenant un mécanisme monté sur ladite cloison d'arrêt de charge ainsi qu'une gâche fixée sur la portion supérieure de l'armature dudit dossier et dotée d'un fil de gâche,
ledit mécanisme comportant un crochet doté d'un bec d'extrémité délimitant partiellement une anse destinée à recevoir une portion dudit fil de gâche, ledit crochet étant monté mobile à pivotement entre une position de retenue dans laquelle ledit bec est apte à coopérer en butée avec ladite portion du fil de gâche de sorte à limiter le débattement vers l'avant dudit dossier, et une position de libération dans laquelle ledit bec est a l'écart dudit fil de gâche de sorte à autoriser le rabattement complet dudit dossier,
ledit siège passager comportant des moyens de verrouillage aptes à verrouiller ledit dossier dans une configuration relevée d'utilisation, ledit dispositif de retenue étant agencé de sorte que, lorsque ledit crochet occupe ladite position de retenue et que ledit dossier est dans ladite configuration relevée d'utilisation, ladite portion du fil de gâche soit reçue dans ladite anse dudit crochet en étant écartée dudit bec d'une distance supérieure à la course de débrayage desdits moyens de verrouillage.

La présence de ce dispositif de retenue permet ainsi d'éviter, en cas de choc violent par l'avant du véhicule, que les charges contenues dans l'espace de chargement arrière propulsées par ripage contre le dossier du siège passager n'entrainent une déformation trop importante de ce dernier et incompatible avec les normes réglementaires de sécurité en vigueur.

Selon des caractéristiques préférées de l'invention :
- ladite distance entre du fil de gâche et ladite anse dudit crochet est comprise entre 40 et 60 mm ;
- ledit dispositif de retenue est agencé de sorte que ladite portion du fil de gâche soit située dans le plan longitudinal passant par l'axe de rotation dudit crochet ou décalée vis-à-vis de ce plan dans la direction opposée au sens de rotation dudit crochet ;
- ledit mécanisme comporte des moyens de butée aptes à limiter le pivotement dudit crochet sur une plage angulaire prédéterminée entre lesdites positions de retenue et de libération ;
- lesdits moyens de butée comprennent deux pattes recourbées ménagées sur ledit crochet et s'étendant de part et d'autre du plan longitudinal passant par l'axe de rotation dudit crochet ;
- ledit mécanisme comporte des moyens de rappel élastique aptes à contraindre en permanence ledit crochet vers ladite position de retenue ;
- ledit mécanisme comporte un butoir en élastomère fixé sur l'une desdites pattes recourbées dudit crochet de sorte à limiter le bruit généré lors du rappel dudit crochet dans ladite position de retenue ;
- ledit mécanisme comporte une équerre comprenant une platine fixée sur ladite cloison d'arrêt de charge ainsi qu'une paroi support s'étendant perpendiculairement à ladite platine, ledit crochet étant monté mobile à pivotement sur un axe solidaire de ladite paroi support ; et/ou
- ledit crochet comporte un organe de commande actionnable par le doigt d'un utilisateur pour le faire pivoter vers ladite position de libération.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 représente une vue partielle en perspective de l'espace arrière d'un véhicule utilitaire comprenant une cloison rigide d'arrêt de charge pourvue d'une ouverture située au niveau du siège latéral passager et obturée par un panneau rigide ;
- la figure 2 est une vue semblable à la figure 1 mais sur laquelle le panneau rigide d'obturation de l'ouverture a été retiré ;
- la figure 3 représente une vue partielle de l'habitacle du véhicule de la figure 1 montrant la partie supérieure du dossier du siège latéral passager verrouillé dans sa configuration relevée d'utilisation ;
- la figure 4 est un agrandissement de la zone de la cloison d'arrêt de charge sur laquelle est montée le mécanisme du dispositif de retenue selon l'invention ;
- la figure 5 représente une vue partielle de dos du dossier du siège latéral passager sur lequel est fixée la gâche du dispositif de retenue selon l'invention ; et
- les figures 6 à 9 sont des vues illustrant le fonctionnement du dispositif de retenue selon l'invention.

### Description détaillée d'un mode préféré de réalisation

Dans la description qui va suivre et par convention, les termes « avant », « arrière », « longitudinal » et « transversal » seront définis par rapport à l'orientation habituelle d'un véhicule automobile.

En référence aux figures, le véhicule automobile de type utilitaire selon l'invention comprend un habitacle 10 et un espace de chargement arrière 20 séparés par une cloison rigide d'arrêt de charge 30.

L'habitacle 10 comporte une unique rangée avant de sièges comprenant un siège latéral conducteur (non visible sur les figures), un siège passager central 12 et un siège passager latéral 13.

La cloison d'arrêt de charge 30 comporte un panneau en tôle 31 fixé à la structure du véhicule s'étendant sensiblement verticalement et transversalement sur l'intégralité de la section transversale du volume interne de ce véhicule, de sorte à constituer une séparation complète entre l'habitacle 10 et l'espace de chargement arrière 20.

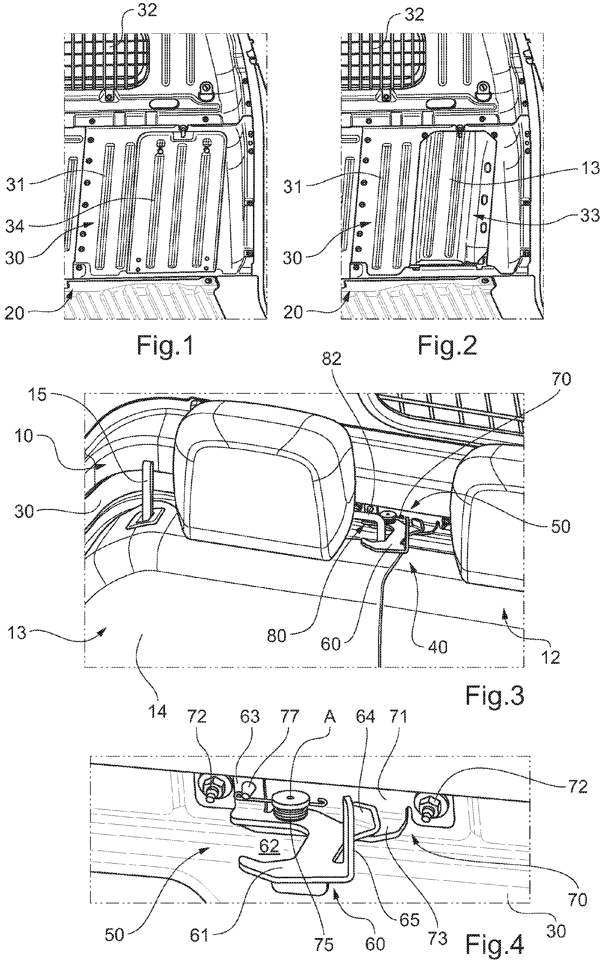

La partie supérieure de ce panneau 31 comprend une fenêtre grillagée 32 centrée sur l'axe longitudinal médian du véhicule et laissant entrevoir sur les figures 1 et 2 une partie de l'habitacle 10. Sa partie inférieure présente une ouverture rectangulaire 33 située au niveau du siège passager latéral 13 et permettant de mettre en communication l'espace de chargement arrière 20 et l'habitacle 10.

La cloison 30 comprend en outre une trappe rigide en tôle 34 apte à être montée de manière amovible, pivotante et/ou coulissante sur la partie inférieure du panneau 31 de sorte à obturer l'ouverture 33 tel qu'illustré par la figure 1.

Le siège passager latéral 13 comprend une assise (non visible sur les figures) et un dossier 14 monté à pivotement sur cette assise via un dispositif d'articulation implanté sur son côté externe (également non visible sur les figures) et comprenant des moyens de verrouillage aptes à verrouiller ce dossier 14 dans une configuration relevée d'utilisation illustrée par la figure 3.

Le siège passager latéral 13 comporte également une tirette de commande 15 saillant de la partie latérale externe supérieure de son dossier 14 et permettant de débrayer ces moyens de verrouillage de sorte faire passer ce dossier 14 dans une configuration déverrouillée dans laquelle il peut être rabattu sur l'assise afin de dégager dans le prolongement de l'ouverture 33 un espace additionnel autorisant le chargement d'objets de longueur supérieure à la profondeur de l'espace de chargement arrière 20.

Selon l'invention, le véhicule comporte en outre un dispositif de retenue 40 permettant de limiter la déformation vers l'avant du dossier 14 du siège passager latéral 13 pouvant être générée, en cas d'accident et lorsque l'ouverture 33 n'est pas obturée par la trappe 34, du fait du ripage des charges contenues dans l'espace de chargement arrière 20.

Le dispositif 40 comporte un mécanisme 50 monté sur le panneau en tôle 31 de la cloison d'arrêt de charge 30, ainsi qu'une gâche 80 fixée sur la portion supérieure interne de l'armature du dossier 14 du siège passager latéral 13.

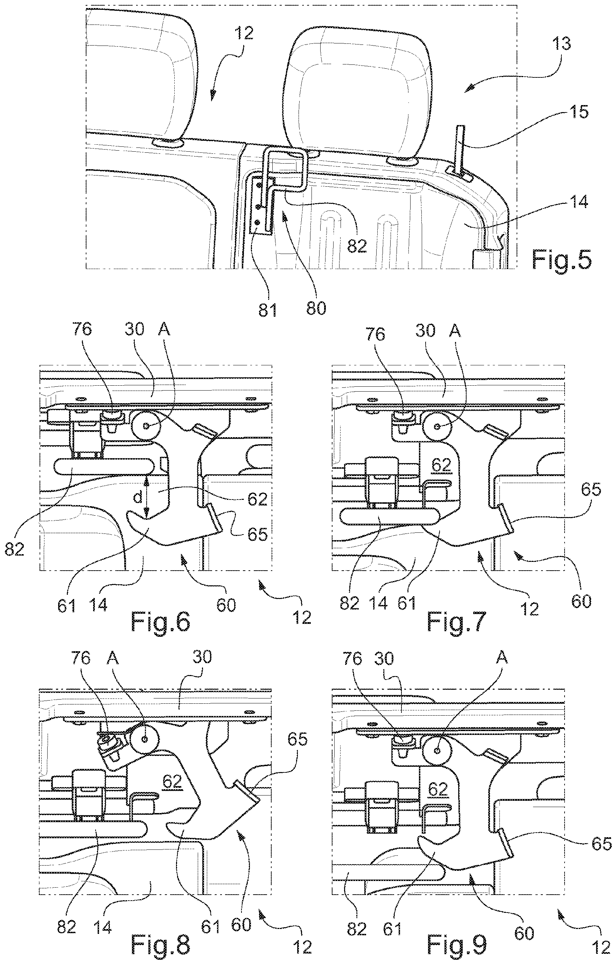

Cette gâche 80, visible dans son intégralité sur la figure 5, comporte une platine métallique rectangulaire 81 vissée sur l'armature du dossier 14 et un fil de gâche métallique 82 en forme de P dont la tête saille partiellement au dessus de ce dossier 14 et dont les deux extrémités libres de ce fil formant la jambe sont soudées sur la platine 81.

Le mécanisme 50 comprend un crochet métallique 60 s'étendant selon un plan horizontal et monté mobile à pivotement autour d'un axe vertical de rotation A sur une équerre métallique 70 fixée par sur le panneau en tôle 31 en dessous de la fenêtre grillagée 32.

L'équerre 70 comporte une platine rectangulaire verticale 71 dotée, à proximité de ses extrémités, de deux orifices (non visibles sur les figures) traversés par des vis 72 assurant la fixation de cette platine 71 sur le panneau en tôle 31.

L'équerre 70 comprend également une paroi support horizontale 73 s'étendant perpendiculairement à la platine 71 le long de la majeure partie de son bord inférieur et sur laquelle l'axe vertical de rotation A est soudé.

Le crochet 60, réalisé avantageusement à partir d'une tôle d'acier découpée et pliée, comporte à son extrémité arrière un bec 61 délimitant partiellement une anse 62 destinée à recevoir une portion verticale de la tête du fil de gâche 82.

La rotation du crochet 60 est limitée sur une plage angulaire prédéterminée entre deux positions extrêmes, à savoir une position de retenue (figures 3, 4, 6, 7 et 9) dans laquelle le bord arrière du bec 61 est apte à coopérer en butée avec cette portion du fil de gâche 82 afin de limiter le débattement vers l'avant du dossier 14 pouvant être causé par le ripage de charges contenues dans l'espace de chargement arrière 20 (figure 7), et une position de libération (figure 8) dans laquelle le bec 61 de ce crochet 60 est à l'écart du fil de gâche 82 de sorte à autoriser le rabattement complet du dossier 14 vers l'assise du siège passager latéral 13.

Le mécanisme 50 comporte également des moyens de butée aptes à limiter le pivotement du crochet 60 sur une plage angulaire prédéterminée entre les positions de retenue et de libération.

Ces moyens de butée comprennent deux pattes recourbées verticalement 63, 64 ménagées sur le crochet 60, ces dernières s'étendant de part et d'autre du plan longitudinal vertical passant par l'axe de rotation A et étant aptes à coopérer en butée avec la platine 71 de l'équerre 70.

Ce mécanisme 50 comporte en outre un ressort de torsion 75 comportant une portion hélicoïdale montée sur l'axe de rotation A ainsi que deux branches radiales espacées angulairement et s'étendant aux deux extrémités de cette portion hélicoïdale en reposant respectivement contre la première patte recourbée 63 du crochet 60 et la platine 71 de l'équerre 70.

Ce ressort de torsion 75 est agencé de sorte à solliciter en permanence le crochet 60 vers sa position de retenue.

Afin de limiter le bruit généré lors du rappel du crochet 60 dans sa position de retenue, le mécanisme 50 comporte avantageusement un butoir en élastomère 76 fixé sur la patte recourbée 63 du crochet 60 venant en butée contre la platine 71 de l'équerre 70.

La fixation de ce bloc en élastomère 76 est en l'espèce réalisée par encliquetage à force d'un pion tronconique 77 (voir figure 4) que comprend ce butoir 76 dans un trou ménagé dans la patte recourbée 63 et non visible sur les figures.

Le crochet 60 comporte en outre, à proximité de son bec 61, un doigt de commande 65 s'étendant verticalement vers le haut et permettant à l'utilisateur de faire pivoter avec l'un de ses doigts ce crochet 60 vers sa position de libération à l'encontre du ressort 75.

On va maintenant décrire rapidement le fonctionnement du dispositif de retenue 40.

Sur la figure 6, le crochet 60 occupe sa position de retenue tandis que le dossier 14 du siège passager latéral 13 est verrouillé dans sa configuration relevée d'utilisation.

Dans cette configuration du véhicule, une portion verticale de la tête du fil de gâche 82 est reçue dans l'anse 62 de ce crochet 60 de sorte qu'en cas de ripage des charges contenues dans l'espace de chargement arrière 20 suite à choc violent par l'avant du véhicule, le débattement du vers l'avant du dossier 14 soit limité par la venue en butée de cette portion du fil de gâche 82 contre le bord arrière du bec 61 de ce crochet 60 (figure 7).

Afin d'éviter tout risque d'entrainement à rotation du crochet 60 lorsque cette portion du fil de gâche 82 vient en butée contre le bec 61 de ce crochet 60, le dispositif de retenue 40 est agencé de sorte que cette portion du fil de gâche 82 soit située dans le plan longitudinal vertical passant par l'axe de rotation A (cas du mode de réalisation illustré par les figures) ou de préférence décalée latéralement vis-à-vis de ce même plan dans la direction opposée au sens de rotation du crochet 60 (c'est-à-dire en l'espèce vers le siège passager central 12).

On notera également que dans la configuration de la figure 6, cette portion du fil de gâche 82 est écartée du bord arrière du bec 61 du crochet 60 d'une distance prédéterminée d supérieure à la course de débrayage des moyens de verrouillage du dossier 14, de sorte à permettre à l'utilisateur de le faire passer via la tirette 15 dans sa configuration déverrouillée sans que ce crochet 60 n'y fasse obstacle en interagissant avec cette même portion du fil de gâche 82.

Cette distance d est avantageusement inférieure à 100 mm et comprise de préférence entre 40 et 70 mm.

Lorsqu'un utilisateur souhaite charger dans le véhicule des objets de longueur supérieure à la profondeur de l'espace de chargement arrière 20, ce dernier doit tout d'abord retirer la trappe amovible 34 tel qu'illustré par la figure 2, puis rabattre le dossier 14 du siège latéral passager 13 sur son assis.

Pour ce faire, après avoir déverrouillé ce dossier 14 via la tirette 15, cet utilisateur doit actionner le doigt de commande 65 de sorte à entrainer à pivotement le crochet 60 vers sa position de libération (figure 8) puis faire basculer ce dossier 14 vers l'avant tout en maintenant ce crochet 60 dans cette dernière position.

Pour repositionner le dossier 14 dans sa configuration relevée d'utilisation de la figure 6, l'utilisateur doit simplement le basculer vers l'arrière.

Lors de ce mouvement, la coopération entre la portion verticale du fil de gâche 82 et le profil biseauté du bord avant du bec 61 entraine le pivotement temporaire du crochet 60 à l'encontre du ressort 75 de sorte à permettre le retour de cette portion verticale du fil de gâche 82 dans l'anse 62 de ce crochet 60 (figure 9), tandis que les moyens de verrouillage du dossier 14 se réembrayent automatiquement dès lors que ce dernier revient dans sa position illustrée par la figure 6.

Selon des variantes de réalisation non représentées, le crochet est conforme différemment.

Celui-ci peut par exemple s'étendre selon un plan longitudinal vertical en étant monté mobile à pivotement autour d'un axe de rotation transversal de sorte à coopérer avec la portion horizontale supérieure de la tête du fil de gâche.

## Revendications

1. Véhicule automobile comportant une cloison d'arrêt de charge (30) s'étendant transversalement entre l'habitacle (10) et un espace de chargement arrière (20), ledit habitacle (10) comportant au moins un siège passager (13) doté d'un dossier rabattable (14), ladite cloison (30) étant pourvue d'une ouverture (33) située au niveau dudit siège passager (13) pour permettre la mise en communication dudit habitacle (10) et dudit espace de chargement arrière (20),
ledit véhicule comportant également un dispositif de retenue (40) comprenant un mécanisme (50) monté sur ladite cloison d'arrêt de charge (30) ainsi qu'une gâche (80) fixée sur la portion supérieure de l'armature dudit dossier (14) et dotée d'un fil de gâche (82),
ledit mécanisme (50) comportant un crochet (60) doté d'un bec d'extrémité (61) délimitant partiellement une anse (62) destinée à recevoir une portion dudit fil de gâche (82), ledit crochet (60) étant monté mobile à pivotement entre une position de retenue dans laquelle ledit bec (61) est apte à coopérer en butée avec ladite portion du fil de gâche (82) de sorte à limiter le débattement vers l'avant dudit dossier (14), et une position de libération dans laquelle ledit bec (61) est a l'écart dudit fil de gâche (82) de sorte à autoriser le rabattement complet dudit dossier (14), **caractérisé en ce que** ledit siège passager (13) comporte des moyens de verrouillage aptes à verrouiller ledit dossier (14) dans une configuration relevée d'utilisation, ledit dispositif de retenue (40) étant agencé de sorte que, lorsque ledit crochet (60) occupe ladite position de retenue et que ledit dossier (14) est dans ladite configuration relevée d'utilisation, ladite portion du fil de gâche (82) soit reçue dans ladite anse (62) dudit crochet (60) en étant écartée dudit bec (61) d'une distance (d) supérieure à la course de débrayage desdits moyens de verrouillage.

2. Véhicule automobile selon la revendication 1, **caractérisé en ce que** ladite distance (d) est comprise entre 40 et 70 mm.

3. Véhicule automobile selon l'une des revendications 1 à 2, **caractérisé en ce que** ledit dispositif de retenue est agencé de sorte que ladite portion du fil de gâche (82) soit située dans le plan longitudinal passant par l'axe de rotation (A) dudit crochet (60) ou décalée vis-à-vis de ce plan dans la direction opposée au sens de rotation dudit crochet (60).

4. Véhicule automobile selon l'une des revendications 1 à 3, **caractérisé en ce que** ledit mécanisme (50) comporte des moyens de butée (63, 64) aptes à limiter le pivotement dudit crochet (60) sur une plage angulaire prédéterminée entre lesdites positions de retenue et de libération.

5. Véhicule automobile selon la revendication 4, **caractérisé en ce que** lesdits moyens de butée comprennent deux pattes recourbées (63, 64) ménagées sur ledit crochet (60) et s'étendant de part et d'autre du plan longitudinal passant par l'axe de rotation (A) dudit crochet (60).

6. Véhicule automobile selon l'une des revendications 1 à 5, **caractérisé en ce que** ledit mécanisme (50) comporte des moyens de rappel élastique (75) aptes à contraindre en permanence ledit crochet (60) vers ladite position de retenue.

7. Véhicule automobile selon les revendications 5 et 6 **caractérisé en ce que** ledit mécanisme (50) comporte un butoir en élastomère (76) fixé sur l'une (63) desdites pattes recourbées (63, 64) dudit crochet (60) de sorte à limiter le bruit généré lors du rappel dudit crochet (60) dans ladite position de retenue.

8. Véhicule automobile selon l'une des revendications 1 à 7, **caractérisé en ce que** ledit mécanisme (50) comporte une équerre (70) comprenant une platine (71) fixée sur ladite cloison d'arrêt de charge (30) ainsi qu'une paroi support (73) s'étendant perpendiculairement à ladite platine (71), ledit crochet (60) étant monté mobile à pivotement sur un axe (A) solidaire de ladite paroi support (73).

9. Véhicule automobile selon l'une des revendications 1 à 8, **caractérisé en ce que** ledit crochet (60) comporte un organe de commande (65) actionnable par le doigt d'un utilisateur pour le faire pivoter vers ladite position de libération.

## Patentansprüche

1. Kraftfahrzeug mit einer sich quer zwischen dem Fahrgastraum (10) und einem hinteren Laderaum (20) erstreckenden Lasttrennwand (30), wobei der Fahrgastraum (10) mindestens einen Fahrgastsitz (13) mit einer klappbaren Rückenlehne (14) aufweist, wobei die Trennwand (30) mit einer Öffnung (33) an dem Fahrgastsitz (1) versehen ist 13) zur Kommunikation des Fahrgastraums (10) und des hinteren Laderaums (20),
Das Fahrzeug umfasst auch eine Rückhalteeinrichtung (40), die einen Mechanismus (50) umfasst, der an der Lasttrennwand (30) angebracht ist, sowie einen Schließer (80), der an dem oberen Teil des Ankers der Rückenlehne (14) befestigt ist und mit einem Schließdraht (82) versehen ist.
Der Mechanismus (50) umfasst einen Haken (60) mit einer Endnase (61), die teilweise eine Nase (62) zur Aufnahme eines Abschnitts des Schließdrahtes (82) begrenzt, wobei der Haken (60) zwischen einer Halteposition, in der die Nase (61) mit dem Abschnitt des Schließdrahtes (82) in Eingriff bringbar ist, schwenkbar gelagert ist so, dass die Vorwärtsbewegung der Rückenlehne (14) begrenzt wird und eine Freigabestellung, in der die Nase (61) von dem Schließdraht (82) weg ist, sodass das vollständige Umklappen der Rückenlehne (14) möglich ist, **dadurch gekennzeichnet, dass** der Beifahrersitz (13) Verriegelungsmittel aufweist, die die Rückenlehne (14) in einer erhöhten Konfiguration verriegeln können Verwendung, wobei die Haltevorrichtung (40) so angeordnet ist, dass, wenn der Haken (60) die Halteposition einnimmt und die Rückenlehne (14) in der erhöhten Gebrauchskonfiguration ist, der Teil des Schließdrahtes (82) in der Nase (62) des Hakens (60) aufgenommen wird, indem er von der Nase (61) um einen Abstand (d) größer als Ausrückweg der Verriegelungsmittel.

2. Kraftfahrzeug nach Anspruch 1, **dadurch gekennzeichnet, dass** der Abstand (d) zwischen 40 und 70 mm liegt.

3. Kraftfahrzeug nach einem der Ansprüche 1 bis 2, **dadurch gekennzeichnet, dass** die Rückhalteeinrichtung so angeordnet ist, dass der Abschnitt des Schließdrahtes (82) in der Längsebene durch die Drehachse (A) des Hakens (60) oder in der Richtung, die der Drehrichtung des Hakens (60) entgegengesetzt ist, von dieser Ebene versetzt ist.

4. Kraftfahrzeug nach einem der Ansprüche 1 bis 3, **dadurch gekennzeichnet, dass** der Mechanismus (50) Anschlagmittel (63, 64) aufweist, die geeignet sind, das Schwenken des Hakens (60) über einen vorbestimmten Winkelbereich zwischen den Halte- und Freigabestellen zu begrenzen.

5. Kraftfahrzeug nach Anspruch 4, **dadurch gekennzeichnet, dass** die Anschlagmittel zwei gekrümmte Laschen (63, 64) umfassen, die an dem Haken (60) ausgebildet sind und sich beiderseits der Längsebene durch die Drehachse (A) des Hakens (60) erstrecken.

6. Kraftfahrzeug nach einem der Ansprüche 1 bis 5, **dadurch gekennzeichnet, dass** der Mechanismus (50) elastische Rückstellmittel (75) aufweist, die geeignet sind, den Haken (60) ständig in Richtung der Halteposition zu drücken.

7. Kraftfahrzeug nach den Ansprüchen 5 und 6, **dadurch gekennzeichnet, dass** der Mechanismus (50) einen elastomeren Anschlag (76) aufweist, der an einer (63) der gekrümmten Laschen (63, 64) des Hakens (60) befestigt ist, um das Geräusch zu begrenzen, das beim Zurücksetzen des Hakens (60) in die Halteposition erzeugt wird.

8. Kraftfahrzeug nach einem der Ansprüche 1 bis 7, **dadurch gekennzeichnet, dass** der Mechanismus (50) einen Winkel (70) umfasst, der eine Platte (71) umfasst, die an der Lastanschlagwand (30) befestigt ist, sowie eine Stützwand (73), die sich senkrecht zu der Platte (71) erstreckt, wobei der Haken (60) schwenkbar an einer fest verbundenen Achse (A) angebracht ist die Stützwand (73).

9. Kraftfahrzeug nach einem der Ansprüche 1 bis 8, **dadurch gekennzeichnet, dass** der Haken (60) ein Steuerorgan (65) aufweist, das durch den Finger eines Benutzers betätigt werden kann, um ihn in die Freigabestellung zu schwenken.

## Claims

1. Motor vehicle having a stop-over bulkhead (30) extending across the passenger compartment (10) and a rear-loading space (20), the said passenger compartment (10) having at least one passenger seat (13) with a folding back (14), the said bulkhead (30) having an opening (33) at the the said passenger seat (13) to enable the communication of the passenger compartment (10) and the rear loading space (20),
that vehicle also includes a restraint system (40) comprising a mechanism (50) mounted on the said load stop bulkhead (30) and a coddle (80) fixed on the top portion of the frame of the said folder (14) and equipped with a codend wire (82),
the said mechanism (50) having a hook (60) with an end bill (61) partially delineating a coat (62) intended to receive a portion of the said coddle wire (82), the said hook (60) being movable and swiveling between a holding position in which the said beak (61) is capable of co-operating in a stop with the said portion of the coddle wire (8 (14), and a release position in which the said bill (61) is away from the said stripwire (82), so as to permit the complete rollback of the said record (14), **characterized by** the fact that the said passenger seat (13) has locking means capable of locking the said record (14) in a configuration having been removed from use, the said restraint device (40) being arranged so that, where the said hook (60) occupies the said restraint position and the said record (14) is in the said configuration that has been removed from use, the said portion of the stripping thread (82) is received in that bracket (62) of the said hook (60) being removed from the said bill (61) by distance (d) greater than the stroke of the said means of locking.

2. Motor vehicle according to claim 1, characterized as the said distance (d) is between 40 and 70 mm.

3. Motor vehicle in accordance with one of the claims 1 to 2, characterized as the said restraint device is arranged so that the portion of the stripwire (82) is located in the longitudinal plane passing through the axis of rotation (A) of the said hook (60) or is offset against that plane in the opposite direction to the direction of rotation of the said hook (60).

4. Motor vehicle according to one of claims 1 to 3, **characterized by** that mechanism (50) having means of stop (63, 64) capable of limiting the pivot of the said hook (60) over a predetermined angular range between the said restraint and release positions.

5. Motor vehicle according to Claim 4, characterized as the said means of stop include two curved legs (63, 64) on the said hook (60) and extending on both sides of the longitudinal plane passing through the axis of rotation (A) of the said hook (60).

6. Motor vehicle according to one of the claims 1 to 5, **characterized by** that mechanism (50) having elastic recall means (75) capable of permanently constraining the said hook (60) towards the said restraint position.

7. Motor vehicle according to claims 5 and 6 **characterized in that** mechanism (50) has an elastomeric nozzle (76) fixed on one (63) of the said curved legs (63, 64) of the said hook (60) so as to limit the noise generated when the said hook is recalled (60) **in that** restraint position.

8. Motor vehicle in accordance with one of the claims 1 to 7, **characterized by** the said mechanism (50) having a bracket (70) comprising a plate (71) fixed on the said load-stopping bulkhead (30) and a supporting wall (73) extending perpendicular to the said plate (71), the said hook (60) being movable mounted on a swivel axis (A) in solidarity with the said supporting wall (73).

9. Motor vehicle according to one of the claims 1 to 8, **characterized by** the fact that the said hook (60) includes a control device (65) which can be operated by a user's finger to rotate it towards the said release position.
